# EUROPEAN PATENT SPECIFICATION

(11) **EP 2 873 536 B1**
(45) Date of publication and mention of the grant of the patent: **22.04.2020**
(21) Application number: 13193063.8
(22) Date of filing: 15.11.2013
(51) Int. Cl.: B60B 3/14, B60B 11/10

(54) **Particular compact small-size emergency tire, for quick mounting to a car wheel having a punctured or possibly irreparably damaged tire**
Besonders kompakter, kleiner Notlaufreifen, zur schnellen Montage an ein Fahrzeugrad mit durchstochenem oder möglicherweise irreparabel beschädigtem Reifen
Pneu de secours de petite taille particulièrement compact, à montage rapide pour une roue de véhicule, ayant un pneu perforé ou éventuellement endommagé de manière irréparable

(43) Date of publication of application: 20.05.2015
(73) Proprietor: Lastrego, Franco, 16156 Genova (IT)
(72) Inventor: Lastrego, Franco, 16156 Genova (IT)
(74) Representative: Karaghiosoff, Giorgio Alessandro

(56) References cited:
- WO-A2-2007/023266
- US-A- 3 567 287
- US-A1- 2009 267 404
- US-B1- 6 217 125

## Description

The object of the present innovation is to always ensure that a car driver can keep on driving his/her car, even in case of total destruction of a tire, without replacing the damaged tire, A device according to the preamble of claim 1 is known from document US6,217,125. According to this document spacer nuts are used for securing the spare tire to the wheel fixing bolt. The present invention aims to simplify the mounting of the spare tire by using simple modified fixing bolt of the wheel.

The present invention achieves the about aim by the combination of features of the preamble of claim 1 with the characterizing part of claim 1.

While the occurrence of events that require tire replacement has decreased, as compared with the past, it should still be accounted for, and all the difficulties associated therewith, that have always understandably worried users, should also be considered.

Therefore, the simple and novel application of our small-size spare tire will be of interest to drivers, while manufacturers will appreciate the advantage of recovering space in cars, due to the very small size and weight of this innovation.

Modern tires, which have a "tubeless" construction, are known to provide improved pressure tightness, but only in case of small punctures, as they have a slow deflation feature. For this reason, it happens rather frequently that drivers keep on driving even when they have an almost totally deflated tire, either because they do not notice the puncture in a convenient time, or because they hope they will soon reach a service station.

This behavior often causes de-beading (i.e. separation of the tire from its seats on the rim), which will almost certainly and irremediably lead to tire destruction.

Drivers are not always aware of this risk and, even when they do have a spare tire onboard, they would still rather keep on driving at reduced speed, hoping to find, as mentioned above, a service center nearby. This happens because, as statistically proven, few drivers can actually replace a tire for their car, due to both inherent difficulties and inadequate expertise.

Furthermore, many cars (as frequently stated herein) imprudently run with no type of spare tire onboard. This occurs, for instance, in the few cars equipped with particular tires (runflat tires) that, in case of simple puncturing, allow running for a considerable distance, without requiring a spare tire, which is wrongly not even present onboard.

Nevertheless, these tires, that are generally used in sport cars, greatly affect driving comfort, due to their rigid and noisy structure, which is still a limitation to their wider use. Also their high cost, as well as the rare and difficult possibility of being repair limit their application.

Even more significantly, the assumed possibility of avoiding the presence of the spare tire is not always true.

No manufacturer might totally exclude the use of at least a small-size spare tire, which would be necessary in case of large holes, cuts or debeading, possibly resulting even from a violent impact against a sidewalk.

Another reason for the lack of a small- or regular-size spare tire onboard is the (increasing) number of gas-powered cars. In these cars, whether new or later converted by the user, the gas tank takes the place of the spare tire, which is thus replaced by a kit comprising a combination of a hole sealing rubber cement and an inflating compressor. While this solution is rather effective, although only for small holes, it still forces provident drivers to drive their car with the space of the baggage compartment reduced by a "potentially necessary" and always effective regular- or small-size spare tire, for security and prudence.

Now, if small-size spare tires already exist, what is the purpose of this innovation? The main reason is in the easy and novel application method that characterizes our spare tire, whose interest also resides in the much smaller size and weight than in the prior art.

Therefore considerable advantages are achieved, as mentioned above, for users and for the design of all kind of cars (particularly electric cars or those with gas systems).

Anyway, the most adverse effect of prior art small-size spare tires is that they involve the same installation difficulties as a regular-size spare tire. Secondly, problems arise in accommodating the replaced wheel in spaces that are often not provided for this purpose in the car.

The Italian magazine "Quattroruote", April 2006, lists all ill effects of current small-size spare tires, in a kind of detailed "trial".

Therefore, there would be no better solution than our small-size spare tire.

### DETAILED DESCRIPTION OF THE INNOVATION

A visual representation of the compact size of this particular spare tire should be provided. The spare tire will have, overall, a smaller volume than the front wheel of a normal motorcycle. Thus, the rim, which basically consists of a sturdy steel disk (as thick as about 8 mm) with four fixation holes at the center, will reach, with the tire, a tubular size with a diameter of about 8 cm.

As explained below, this small-size spare tire will be directly mounted using the fastening bolts of the car wheel.

The basic features and advantages are as follows:
a) The damaged tire will not have to be removed.
b) New particular bolts, only slightly and insignificantly different from normal bolts, will be already mounted to the new cars, or may replace currently used bolts.
c) If desired, the use of a jack may be avoided.
d) The car will be able to keep on running, even with a totally destroyed tire.
e) Installation will require a few minutes and will be easy and safe for anyone.
f) The very low weight and small size will allow designers to find a place, requiring little space, in various locations of the car.

The above has been successfully tested on the road. A moderate speed should be kept, like in prior art small-size spare tires, until reaching a service station that might solve the problem. However, the covered distance is not particularly limited.

It will be understood that each small-size spare tire shall be related to the diameter of the relevant wheel, but may be also mounted to various car models.

The new bolts, which are actually similar, at first sight, to current bolts, will only have a slightly longer head (by about 10 mm) than currently used bolts. This head will have a precisely sized hole (about 10 mm deep), which has the novel feature of being threaded (which may be also useful for other purposes, e.g. fastening of particular chains).

When nuts are used instead of bolts, such nuts (which will obviously not be box nuts ) shall be simply longer and entirely threaded.

The bolts (or nuts) so designed, when exposed to the view, will not alter the exterior appearance of the wheel and will be even better than other bolts, in certain cases.

When wheels will be equipped with them, their particular head may be entirely enclosed and directly "extended", by simply fitting a particular novel "extension bolt" thereon, which has a precisely sized hex hollow head and an entirely threaded shank (having a diameter of about 15 mm). For the bodies of the two facing bolts to be firmly joined, the "extension bolt" will have a precisely sized smooth through hole extending throughout its length (about 8 cm). Due to this hole, the two coupled heads may be strongly "secured" to each other by sliding them within such hole, and by later tightening a special locking bolt, having a precise length and a hex head. Therefore, the threaded hole formed on the underlying head of the particular wheel bolt may be reached: the locking bolt will be thus quickly and perfectly tightened.

In less than one minute, the four bolts of the wheel will be all firmly extended, and turned into four sturdy threaded columns, which will be ready to receive our spare tire thereon, which will be later locked by four respective nuts.

This will quickly provide a kind of compact and solid small "twin" wheel that will only have a minor lateral projection and hence a very small and insignificant gage change. This will find application in all normal cars, although it may be also extended (with appropriate changes) to particular cars.

It shall be understood and noted that all the weight on the small-size spare tire will be jointly supported by the four sturdy "extension bolts", which are essentially "secured" to the bolt wheels. Furthermore, the inner fixation volts will add strength to the entire assembly.

The drawing and reference numerals will briefly illustrate the above.

The installation of this small-size spare tire will obviously require the use of a jack to lift the damaged wheel to a sufficient extent. Nevertheless, since the possibility of avoiding the use of a jack has been mentioned above, such possibility will be elucidated in this second part of the disclosure.

It shall be first noted that neither the wheel nor a part of the car will have to be entirely lifted from the ground (unlike in prior art spare tires). A small compressor (possibly the one combined with the hole sealing rubber cement) will be simply used to try and inflate the punctured tire: if the hole is small, pressure will increase in the tire, and will lift it, for easy lateral insertion of the spare tire. Thus, the latter will act as a "shoulder" for the tire during driving, and will still partially utilize its effiency. Otherwise, if the tire inflated by the compressor is not easily lifted or is lifted only temporarily, lateral insertion of the spare tire should be possible anyway. If a serious cause (cut, etc.) prevents the tire from being inflated, a special (and specially manufactured) small inflatable tubular cushion shall be provided and used. The latter will be placed under the wheel and inflated by the compressor, and will quickly lift the wheel, for easy application of the spare tire.

All the above situations will avoid the use of the jack, as desired.

Since the presence of a compressor in a car is useful and advisable (and is already supplied by many manufacturers) we believe that the above mentioned practical small tubular cushion would be rather used instead of a jack (which is heavier, has a larger volume and is more difficult to use).

Manufacturers may judge what is best, and the user may still have a choice.

The basic characteristics of the innovation are briefly and schematically illustrated in the claims, whereas the annexed drawing 1 provides a visual representation of what is described herein.

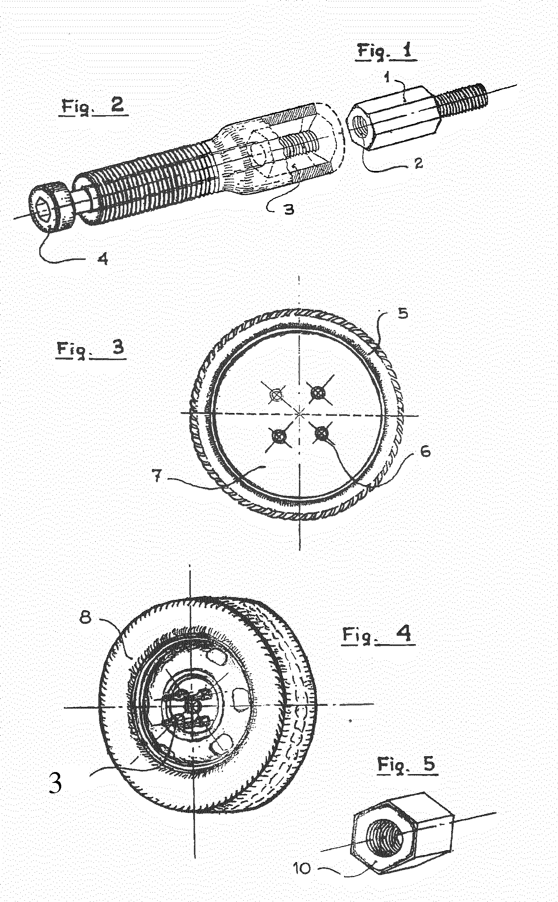

In the drawing 1, Figure 1 numeral 1 designates the hex body (about 25 mm long) of one of our particular wheel bolts, with the novel threaded hole, referenced 2, at its center.

In Figure 2, numeral 3 designates the entire body of one of the four particular "extension bolts" (about 80 mm long) having a hex hollow head, which is designed to fit onto the bolt of Fig. 1, and having an entirely threaded shank having a diameter of about 15 mm, with a smooth through hole extending therein throughout its length. The locking bolt, referenced 4, is shown within such hole and will slide to be eventually tightened in the hole 2 of the head of the wheel bolt (Fig. 1). Such strong tightening engagement will actually "secure" the inserted heads of the two bolts, thereby extending the bolt of Fig. 1 as desired, and turning it into a threaded column.

Figure 3 is a front view of the spare tire assembly, where numeral 5 designates the narrow and sturdy tire (which may also be formed of solid rubber), whereas numeral 7 designates the solid steel flat central part of the spare tire, which is as thick as about 8 mm, and will form the structure of the rim, with the four holes, referenced 6, at its center.

In Figure 4, numeral 8 designates the appearance of a wheel (which is in practice installed on the car), with its particular bolts already having the four special "extension bolts" of Figure 2, referenced 3, fixed thereto, and ready to receive the entire spare tire (see figure 3) therein, through the four holes (referenced 6) thereon.

Finally, in Figure 5, numeral 10 designates one of the four special nuts that are tightened on the "extension bolts" 3 of Figure 4, thereby firmly and adherently securing the spare tire to the wheel.

## Claims

1. A compact small-size spare tire arrangement for cars, essentially consisting of a rugged flat steel wheel (7) having a thickness of about 8 mm, connected to a rim and tire (5) of minimum tubular volume having a diameter of about 80 mm, at least one simple bolt and at least one extension bolt (3), the flat structure of the flat steel wheel (7) allowing direct, twin mounting of the small-size tire to the damaged wheel of a car that shall not be removed, by using the same particular simple bolts that fix the wheel, without removing them;.
the said simple bolts, having a head (1) with a threaded central hole (2), allowing fixation of the special extension bolt when needed,
**characterized in that**
the said "extension bolt", being about 80 mm long, having an entirely threaded rugged shank, with a smooth through hole extending through its entire length, for receiving a special sliding locking bolt (4),
the said extension bolt having a head with an inner hollow hex section which could be tightly and fully fitted to the outer hex head of the wheel bolt;
the said outer hex head of the simple bolt being about 25mm long.

## Patentansprüche

1. Kompakte Ersatzreifenanordnung für Fahrzeuge, bestehend im Wesentlichen aus einem robusten flachen Stahlrad (7), das eine Dicke von ca. 8 mm aufweist und mit einer Felge und einem Reifen (5) mit einem minimalen Rohrvolumen und einem Durchmesser von ca. 80 mm verbunden ist, mindestens einem einfachen Bolzen und mindestens einem Verlängerungsbolzen (3), wobei der flache Aufbau des flachen Stahlrades (7) eine direkte Doppelmontage des Kleinreifens auf das beschädigte nicht zu entfernende Rad eines Fahrzeuges ermöglicht, unter Verwendung der gleichen besonders einfachen, das Rad festlegenden Bolzen, ohne diese zu entfernen; wobei die genannten einfachen Bolzen einen Kopf (1) mit einem Gewindemittelloch (2) aufweisen, der bei Bedarf eine Fixierung des speziellen Verlängerungsbolzens ermöglicht, **dadurch gekennzeichnet, dass** der "Verlängerungsbolzen" etwa 80 mm lang ist und mit einem robusten, vollständig mit Gewinde versehenen Schaft mit einem glatten Durchgangsloch versehen ist, das sich durch seine gesamte Länge zur Aufnahme eines speziellen Gleitverriegelungsbolzens (4) erstreckt, wobei der Verlängerungsbolzen einen Kopf mit einem hohlen Innensechskantabschnitt aufweist, der dicht und vollständig am Aussensechskantkopf des Radbolzens angebracht werden kann; wobei der Aussensechskantkopf des einfachen Bolzens etwa 25 mm lang ist.

## Revendications

1. Ensemble compact de pneus de rechange de petite taille pour voitures, constitué essentiellement d'une roue (7) robuste en acier plat ayant une épaisseur d'environ 8 mm, reliée à une jante et à un pneu (5) de volume tubulaire minimum ayant un diamètre d'environ 80 mm, d'au moins un boulon simple et d'au moins un boulon d'extension (3),
la structure plate de la roue en acier plat (7) permettant le montage jumelé direct du pneu de petite taille sur la roue endommagée d'une voiture sans qu'il soit nécessaire de l'enlever, en utilisant les mêmes boulons simples particuliers qui fixent la roue, sans les enlever;
lesdits boulons simples ayant une tête (1) avec un trou central fileté (2), permettant la fixation du boulon d'extension spécial en cas de besoin,
**caractérisé en ce que**
ledit "boulon d'extension", d'une longueur d'environ 80 mm, ayant une tige robuste entièrement filetée, avec un trou traversant lisse s'étendant sur toute sa longueur, pour recevoir un boulon de verrouillage coulissant spécial (4),
ledit boulon d'extension ayant une tête avec une section hexagonale intérieure creuse qui peut être couplée de façon serrée et complète à la tête hexagonale extérieure du boulon de la roue;
ladite tête hexagonale extérieure du boulon simple ayant une longueur d'environ 25mm.
